# FASCICULE DE BREVET EUROPEEN

(11) **EP 1 652 266 B1**
(45) Date de publication et mention de la délivrance du brevet: **23.08.2017**
(21) Numéro de dépôt: 04785996.2
(22) Date de dépôt: 23.07.2004
(51) Int. Cl.: H01Q 1/12, H01Q 15/00, B32B 17/10, B60J 1/02, H05B 3/84

(54) **Vitre de fenêtre avec un revêtement électriquement conducteur chauffable et une fenêtre de communication**
Fensterscheibe mit einer elektrisch leitfähigen und beheizbaren Beschichtung und einem Kommunikationsfenster
Pane with an electrically conducting and heatable coating and at least one communication window

(30) Priorité: 24.07.2003 DE 10333618
(43) Date de publication de la demande: 03.05.2006
(73) Titulaire: SAINT-GOBAIN GLASS FRANCE, 92400 Courbevoie (FR)
(72) Inventeur: MÄUSER, Helmut, 52134 Herzogenrath (DE)
(74) Mandataire: Lendvai, Tomas
(86) Numéro de dépôt international: PCT/FR2004/001978
(87) Numéro de publication internationale: WO 2005/011052

(56) Documents cités:
- EP-A- 0 717 459
- EP-A- 1 422 784
- WO-A-00/72634
- WO-A-01/68395
- WO-A-2004/037737
- US-B1- 6 352 754

## Description

L'invention se rapporte à un vitre de fenêtre avec un revêtement électriquement conducteur et chauffable et avec une fenêtre de communication, présentant les caractéristiques du préambule de la revendication 1.

Le brevet DE 195 03 892 C1 divulgue des mesures pour réduire le blindage de vitres revêtues à l'égard de rayons de micro-ondes transmettant des informations. De telles vitres avec des revêtements électriquement conducteurs et optiquement trans-parents trouvent leur application comme vitres d'isolation thermique réfléchissant les rayons infrarouges (IR) et/ou comme vitres à chauffage électrique aussi bien pour le vitrage de bâtiments que pour le vitrage de véhicules.

Dans des véhicules, elles forment avec une carrosserie métallique une cage de Faraday, qui protège l'espace intérieur du véhicule contre des champs électromagnétiques. Dans la construction en hauteur également, on peut protéger électriquement des locaux par l'utilisation de vitres avec un revêtement électriquement conducteur et une structure électriquement conductrice correspondante des autres murs. Avec des blindages de cette nature, des appareils sensibles comme des ordinateurs de contrôle peuvent être protégés, dans le domaine de la construction, contre les influences perturbatrices dues à des émetteurs radiophoniques ou à des installations de radar de grande puissance.

D'autre part, le blindage ne laisse pas non plus passer le rayonnement électromagnétique dans le domaine des micro-ondes, qui est utilisé comme onde porteuse pour des informations. Si un émetteur et/ou un récepteur se trouve à côté de l'antenne dans un espace (de véhicule) protégé, il apparaît des problèmes de transmission. Par exemple, des systèmes de détermination de la position des véhicules, de commande à distance, d'identification, de fixation de redevances, ou analogues sont perturbés.

Il est connu de structurer a posteriori, par voie mécanique ou thermique, des systèmes de couches par l'enlèvement de lignes de la couche déposée initialement de façon continue. En particulier, on peut produire avec des rayons laser des fentes extraordinairement étroites dans la couche. Un procédé d'incision par rayon laser pour former un motif à grille est par exemple décrit dans le document EP 0 717 459 A1. Dans l'état de la technique précité, on ménage comme remède dans la couche électriquement conductrice au moins une fente formant une fente rayonnante, avec une longueur accordée à la longueur d'onde du rayonnement de micro-ondes et une très petite surface libre, à travers laquelle l'énergie rayonnante dans la gamme des micro-ondes captée par la couche conductrice peut à nouveau être découplée. On forme ainsi une fenêtre dite de communication.

Si la fréquence de travail pour la transmission d'information vaut par exemple 5,8 GHz, comme cela est prévu pour la fixation automatique des redevances sur les autoroutes ("télépéage") (norme DSRC avec une fréquence moyenne de 5,8 GHz avec polarisation circulaire) et si les fentes sont prévues principalement pour la transmission des micro-ondes de cette fréquence, celles-ci seront de manière appropriée conçues à la longueur de résonance de λ/2 en tenant compte des constantes diélectriques du verre.

Au cas où l'information est transmise avec des micro-ondes à polarisation circulaire (c'est-à-dire que le plan d'oscillation instantané des ondes tourne autour de son axe de propagation, de sorte que les ondes oscillent à l'intérieur d'une courbe enveloppe circulaire), il est prévu de manière appropriée des évidements en forme de fentes cruciformes dans la couche. La longueur des deux fentes est à nouveau accordée de manière appropriée à la longueur d'onde des micro-ondes utilisées et correspond à la valeur λ/2 des micro-ondes utilisées, en tenant compte de façon correspondante des constantes diélectriques du verre.

Des mesures comparatives de l'amortissement d'un rayonnement de micro-ondes de fréquence 5,8 GHz indiquent, dans cet état de la technique, qu'avec une vitre feuilletée présentant des fentes rayonnantes dans le revêtement, on obtient un amortissement de la transmission, pour un rayonnement à haute fréquence, nettement plus faible qu'avec une vitre feuilletée entièrement revêtue, et que l'on peut s'approcher de l'amortissement d'une vitre feuilletée non revêtue.

Le document DE 198 17 712 C1 décrit un substrat analogue avec une fenêtre de communication dans un revêtement, qui est produite par la création d'une structuration sous la forme de fines lignes ou de fins motifs dans une partie limitée de la surface du revêtement et qui est visuellement très discrète.

La formation de structures résonantes dans le revêtement conducteur pose cependant des problèmes. Des résultats d'essais ont montré que les courants à haute fréquence nécessaires pour la compensation, dans le système global formé par le substrat diélectrique et le revêtement conducteur, ne pouvaient pas circuler par suite de la haute résistance de surface ou de perte des revêtements conducteurs usuels.

Le document WO 00/72635 A1 décrit un substrat transparent avec un revêtement réfléchissant les IR et une fenêtre de communication réalisée par l'enlèvement superficiel ou l'omission du revêtement. Contrairement aux fenêtres de communication réalisées uniquement sous la forme de fines lignes, discutées dans l'introduction, cette variante forme une perturbation du revêtement nettement perceptible à la vue par une différence de couleur à la limite du revêtement.

Cette perturbation pose en particulier un problème, lorsque le revêtement en même temps est utilisé pour le chauffage électrique du substrat. A cet effet, on applique une tension au revêtement à l'aide d'au moins une paire d'électrodes (en forme de bandes), les courants devant être introduits et répartis aussi uniformément que possible dans la surface de la couche. Pour des vitres de véhicules, qui sont nettement plus larges que hautes, les électrodes en forme de bandes sont la plupart du temps situées le long des plus longs côtés de la vitre, de telle sorte que le courant de chauffage puisse circuler sur le chemin le plus court sur la hauteur de la vitre. En même temps, les fenêtres de communication sont situées sur l'arête supérieure de la vitre et s'étendent ici sur une largeur de plusieurs centimètres. On connaît justement du document WO 00/72634 A1, une vitre pourvue d'un revêtement électriquement conducteur de contrôle solaire qui présente sa fenêtre de communication sur l'extrême bord supérieur de la vitre.

Manifestement, chaque fenêtre de communication affectant l'homogénéité du revêtement forme une perturbation du flux de courant. Il apparaît des pics de température locaux ("hot spots": points chauds) qui peuvent conduire à des dégâts au substrat (contraintes thermiques) et au revêtement lui-même. Ce n'est pas seulement le cas lorsque le revêtement est de grande étendue, mais aussi lorsque la fenêtre de communication est formée par un nombre plus ou moins grand de fentes individuelles discontinues. Celles-ci forment également dans la zone de la surface considérée une augmentation sensible de la résistance de la couche et provoquent également en plus l'apparition des points chauds mentionnés plus haut.

Le document WO 01/68395 A1 est relatif à une vitre pourvue d'un revêtement électriquement conducteur de chauffage et de contrôle solaire et comportant deux fenêtres de transmission éloignées. Pour diminuer l'effet perturbateur de ces fenêtres, la portion séparant les deux fenêtres est électriquement en contact avec le revêtement chauffant.

Le document WO 00/72635 A1 propose, comme mesure visant à réduire l'effet perturbateur de la grande fenêtre de communication, de prévoir sur le bord de celle-ci une bande électriquement conductrice, qui présente une résistance ohmique par unité de surface beaucoup plus faible que la couche de chauffage. Ceci devrait dévier les courants autour de la découpe. De préférence, une fenêtre de communication est entièrement encadrée par une telle bande. La bande peut être fabriquée par impression et cuisson d'une pâte de sérigraphie conductrice, contenant de l'argent. Elle peut cependant aussi être appliquée par le dépôt d'une laque électriquement conductrice ou par la pose d'une bande métallique. Dans tous les cas, il faut naturellement une liaison fonctionnelle électriquement conductrice de la bande avec le revêtement.

La bande peut être masquée à la vue par la superposition d'une bande de masquage opaque, non conductrice de l'électricité, par exemple en émail noir. De telles bandes de masquage se composent en règle générale d'une matière non conductrice, de couleur noire, qui peut être cuite (pâte de sérigraphie). Un rayonnement infrarouge n'est pas réfléchi, mais absorbé, par cette matière.

Le problème à la base de l'invention est de procurer un substrat encore amélioré avec un revêtement chauffable et une fenêtre de communication ménagée dans celui-ci.

A cet effet, l'invention propose un substrat, en particulier vitre de fenêtre, avec un revêtement électriquement conducteur et chauffable, au moins une fenêtre de communication ménagée dans ce dernier sous la forme d'une interruption dudit revêtement, la fenêtre étant apte à laisser passer un rayonnement dit de communication utilisé comme signal porteur d'informations à transmettre et dont la longueur d'onde est comprise dans une plage de longueurs d'onde pouvant être réfléchies ou absorbées par le revêtement, et un autre élément électriquement conducteur en contact avec au moins une partie de bords de la fenêtre et en contact avec le revêtement, la fenêtre de communication étant pourvue d'un recouvrement électriquement conducteur et relié électriquement audit autre élément électriquement conducteur, le recouvrement laissant passer le rayonnement de communication à transmettre à travers la fenêtre de communication.

Du fait que la fenêtre de communication, donc une zone de la surface non revêtue par le revêtement chauffable lequel de préférence réfléchit les IR, soit pourvue d'un recouvrement selon l'invention lui-même électriquement conducteur (perméable au courant continu), qui est à son tour en liaison électriquement conductrice avec le revêtement directement ou par l'intermédiaire de l'autre élément électriquement conducteur, des courants (de chauffage) peuvent circuler dans cette zone. Le recouvrement forme une dérivation électrique ou un pont.

Le recouvrement peut être produit avant ou après le dépôt du revêtement sur le substrat. Le recouvrement est déposé sur le revêtement de telle façon qu'il recouvre de tous les côtés les bords de la fenêtre de communication sans revêtement et comprend en outre ledit autre élément électriquement conducteur.

De préférence, le recouvrement peut présenter une résistance ohmique par unité de surface inférieure à la résistance ohmique par unité de surface dudit revêtement.

Le revêtement peut être alimenté et dès lors chauffé par une tension électrique au moyen d'au moins deux électrodes, le recouvrement électriquement conducteur est situé dans le flux de courant entre les électrodes.

Le recouvrement peut également être chauffé sous forme de chauffage par résistance.

Le recouvrement est susceptible laisse passer le rayonnement de communication à transmettre à travers la fenêtre de communication ou qui n'atténue ledit rayonnement que faiblement.

Des interruptions sont ménagées dans le recouvrement, qui augmentent sa perméabilité audit rayonnement de communication à travers la fenêtre de communication mais qui n'empêchent cependant pas un flux de courant à travers le recouvrement.

Selon un perfectionnement préféré de l'invention, on crée dans le recouvrement des structures de résonance appropriées sous la forme d'ouvertures ou interruptions, dont les dimensions peuvent être accordées de façon connue en soi aux caractéristiques du rayonnement de communication (fréquence, longueur d'onde, polarisation, etc.).

Le problème mentionné dans l'introduction, concernant des courants de compensation trop faibles, se manifeste de façon nettement moins marquée avec des recouvrements selon l'invention, en particulier lorsque ceux-ci ont une bien meilleure conductibilité (moins grande résistance de surface) que la matière du revêtement.

Si les ouvertures ou interruptions dans le recouvrement sont fabriquées avec une surface aussi petite que possible, on ne peut déceler aucune limitation sensible ni même d'interruption des chemins de courant dans le recouvrement, malgré le bon effet prouvé sur la transmission des longueurs d'onde considérées ici, parce que des zones "mortes" entre les interruptions peuvent être évitées ou même entièrement supprimées. Cette situation a pu être confirmée à l'aide de thermographies d'échantillons expérimentaux.

De façon très préférée, les dimensions des ouvertures dans le recouvrement sont accordées à la(aux) longueur(s) d'onde du rayonnement de communication.

Etant donné que le recouvrement n'est préférablement interrompu que localement, pour ne pas perturber sa conductibilité électrique générale, seules des fentes entrent en ligne de compte comme structures d'ouvertures. Ces structures de fentes sont disposées en un champ dans la zone du recouvrement.

Les interruptions peuvent de préférence être formées dans différentes directions, en particulier perpendiculairement l'une à l'autre, en particulier si l'on transmet un rayonnement de communication présentant une polarisation circulaire.

On peut choisir des structures telles que des polygones, des ellipses et des cercles ainsi que des croix. Des structures de polygones ou d'ellipses fermées par nature peuvent former cependant dans le recouvrement des "îlots" de surface passifs, sur les bords desquels il pourrait à nouveau se former des points chauds.

Une forme de réalisation plus avantageuse serait une croix, qui est composée de quatre branches égales avec une longueur (λ/4) correspondant au quart de la longueur d'onde du rayonnement considéré. Chacune des quatre fentes forme une antenne à fente. Elle est ouverte sur un côté et est raccourcie de la moitié de la longueur de la fente perpendiculaire. De plus, elle reçoit une charge capacitive par les champs de dispersion dans la fente perpendiculaire, c'est-à-dire qu'elle est prolongée.

Pour la longueur des fentes individuelles, il en résulte en première approximation un résonateur raccourci de la moitié de la largeur de la fente. La fréquence de résonance de la fente en croix est donc égale à la fréquence de résonance d'une fente simple, raccourcie de la moitié de sa propre largeur.

La distance horizontale et verticale de structures individuelles l'une par rapport à l'autre peut être de préférence inférieure à la longueur d'onde λ. La largeur de fente peut de préférence être de λ/10.

Par exemple, compte tenu des paramètres des matériaux, de la permittivité et du facteur de perte des matériaux verre et film adhésif (PVB par exemple) dans le verre feuilleté, il en résulte les dimensions théoriquement optimales suivantes: hauteur et largeur des croix 11,5 mm, largeur de fente 0,5 mm, distance des centres des croix 15 mm. Avec un tel étalement serré des croix en lignes, il ne resterait cependant entre les bouts de deux bras de croix que des portions de recouvrement d'environ 3,5 mm de largeur. Celles-ci peuvent former à nouveau des étranglements pour le flux de courant, et il peut apparaître à nouveau des points chauds.

Pour limiter ces étranglements, la structure de croix peut être remplacée par une structure périodique composée de fentes individuelles disposées en lignes, en alternance perpendiculaire l'une par rapport à l'autre. La longueur optimale pour des structures de fentes résonantes correspond à la moitié de la longueur d'onde (λₑₗ/2) du rayonnement considéré avec une fréquence de 5,8 GHz, avec λₑₗ = c/(f*√εᵣ) et la constante diélectrique εᵣ d'une vitre feuilletée vaut environ 4,7. Des structures résonantes ont donc dans le présent exemple de réalisation une longueur d'environ 12 mm.

D'autres fréquences et d'autres longueurs d'onde ainsi que d'autres substrats conduiraient à des valeurs différentes.

De préférence, le recouvrement peut être fabriqué par impression, en particulier par sérigraphie d'une encre électriquement conductrice.

Cette méthode de fabrication peut être intégrée au mieux dans le processus de production établi des substrats considérés, en particulier de pare-brise de véhicules. Car ceux-ci sont pour la plupart déjà pourvus de motifs ou de bandes par sérigraphie.
La résistance de couche de l'agent d'impression utilisé comme recouvrement peut être de préférence inférieure à 2 ohms_{carré}. Cette dernière valeur est une valeur typique pour la résistance de surface d'un revêtement transparent électriquement conducteur.

Il peut être prévu au moins deux électrodes en forme de bandes, appliquées par impression, en particulier par sérigraphie, pour introduire une tension de chauffage dans le revêtement.

Le recouvrement et les électrodes peuvent être composés de la même matière et peuvent être de préférence imprimés en une seule opération.

De bons résultats de transmission ont été obtenus avec une largeur de fente de 1 mm.

Les distances horizontales et verticales des fentes l'une par rapport à l'autre valaient 12,75 mm. Pour la fabrication expérimentale du recouvrement, on a employé une pâte d'argent noire DR 08-03 (un émail vitreux à cuire, fabricant Ferro). Celle-ci avait après la cuisson une résistance de couche d'environ 15 mΩ_{carré}. Son épaisseur est de préférence comprise dans la gamme de 8 - 15 µm.

A l'aide de thermographies, il est apparu clairement qu'il ne s'est produit aucun hot spot notable et qu'aucune puissance de chauffage de surface notable n'a été fournie dans la zone du recouvrement. Il se forme des chemins de courant sinueux, qui ont partout une largeur suffisamment constante, afin d'éviter des surchauffes locales.

Un objectif technologique avantageux de l'invention est d'atteindre, dans la zone de la fenêtre de communication, une transmission comparable aux vitres feuilletées normales (amortissement de 2 - 4 dB) pour le rayonnement de communication, et est déjà atteint de cette façon.

Cet objectif présente une priorité plus élevée que le chauffage de la vitre dans la zone de la fenêtre de communication, qui n'est de toutes façons pas transparente, ou qui ne l'est que partiellement, à cause du recouvrement.

Si la région du recouvrement néanmoins contribue au chauffage de la surface, par exemple pour obtenir une répartition plus homogène de la chaleur dans le substrat, le recouvrement est alors réalisé avec une résistance de surface nettement plus grande.

Ceci peut cependant être obtenu par une diminution de l'épaisseur du dépôt, une diminution de la teneur en pigments conducteurs (par exemple la teneur en argent) dans l'encre de sérigraphie, un autre procédé de dépôt pour le recouvrement, par un étalement plus serré des structures, cette énumération de mesures n'étant pas exhaustive.

Au contraire, l'homme du métier peut appliquer toute mesure qui lui paraît adéquate pour adapter la résistance du recouvrement en fonction des besoins concrets, sans quitter pour autant le cadre de l'invention.

Il n'est pas absolument nécessaire d'utiliser une encre d'imprimerie à cuire (résistante à haute température) pour le recouvrement, car on peut imaginer des cas d'application sans opération de cuisson. Etant donné que le recouvrement est en général placé d'office en position protégée à l'intérieur d'une vitre feuilletée, il peut en principe également se composer de substances moins résistantes mécaniquement, par exemple d'encres conductrices organiques.

Les paramètres électriques indiqués ici et dans la suite, comme les résistances de couche, les puissances électriques et la transmission minimale de lumière de vitres de véhicules sont des valeurs pratiques. Il va de soi que celles-ci ne limitent pas l'application de l'invention, mais que cette dernière peut également être utilisée pour des vitres présentant d'autres valeurs limites de transmission, d'autres valeurs de la tension de fonctionnement et résistances de couche (plus faibles).

Le recouvrement peut former au moins en partie un pare-soleil, de préférence situé entre deux pare-soleils rabattables.

Le substrat peut être constitué par une vitre feuilletée composée d'une première vitre rigide pourvue du revêtement et du recouvrement, dudit autre élément électriquement conducteur, d'une couche adhésive et d'une seconde vitre rigide.

D'autres détails et avantages de l'objet de l'invention apparaîtront par les dessins d'un exemple de réalisation et par leur description détaillée qui suit.

Dans ces dessins, constituant des représentations simplifiées et non à l'échelle :
la Fig. 1 est une vue partielle d'un pare-brise de véhicule revêtu avec une fenêtre de communication prévue dans le revêtement et un recouvrement conducteur couvrant celle-ci ; et,
la Fig. 2 est une représentation en coupe suivant la ligne II-II de la Fig. 1.

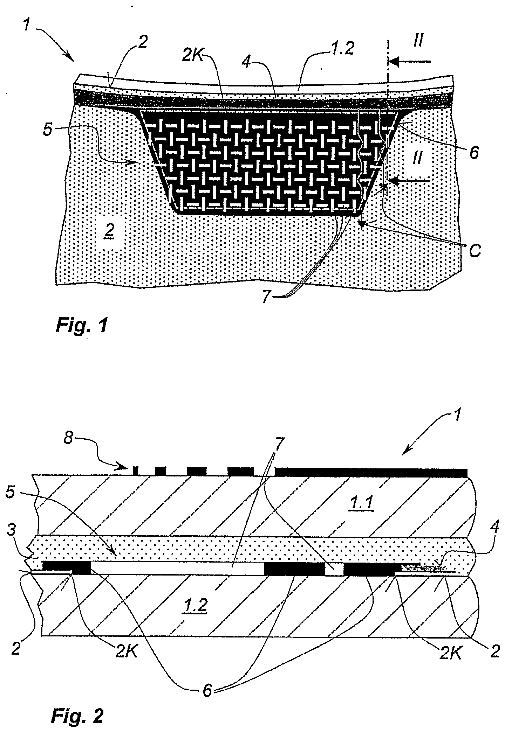

La Fig. 1 montre une partie d'une région de bord d'une vitre feuilletée 1, qui est pourvue d'un revêtement 2 électriquement conducteur, hautement transparent à la lumière visible. Dans le présent exemple de réalisation, ce revêtement se situe, comme on peut mieux le voir dans la Fig. 2, à l'intérieur du composite, qui se compose de deux vitres transparentes 1.1 et 1.2 ainsi que d'un film adhésif 3 assemblant celles-ci l'une à l'autre par collage superficiel. Le revêtement 2 est ici déposé directement sur la vitre 1.2 servant de substrat disposée à l'intérieur du composite. La vue de la Fig. 1 est obtenue lorsque l'on enlève mentalement la vitre 1.1 et le film adhésif 2. En position de montage comme pare-brise d'un véhicule, la vitre 1.2 forme la vitre extérieure; la vitre 1.1 est tournée vers l'espace intérieur du véhicule.

Le revêtement 2 se compose de préférence d'un système de couches à haute résistance thermique avec au moins une couche métallique à faible résistance ohmique, de préférence en argent, ainsi que d'autres couches, en particulier avec des propriétés diélectriques, à haute réfringence optique (antireflets) et le cas échéant des couches de blocage. De tels systèmes de couches bien connus peuvent être déposés sur des vitres en position plane et supportent sans dommages les températures de 650°C et davantage nécessaires pour le cintrage ultérieur des vitres. La vitre feuilletée terminée assure de préférence une transmission de lumière d'au moins 70%.

Le système de couches terminé a une résistance de surface d'environ 2 à 4 Ω_{carré}. Il est utilisé comme revêtement chauffable et de préférence réfléchit des rayons thermiques (rayonnement IR). A cet effet, la vitre feuilletée 1 est pourvue, de façon connue en soi, d'au moins deux barrettes de collecte de courant de part et d'autre du revêtement 2, dont seule la barrette supérieure, désignée par le repère 4, est visible ici. Les deux barrettes de collecte de courant s'étendent de la façon usuelle le long des côtés supérieur et inférieur de la vitre feuilletée en position montée. Elles sont réalisées par impression et cuisson d'une encre électriquement conductrice, en particulier par sérigraphie d'une pâte à haute teneur en argent. Lorsqu'elles sont soumises à une tension électrique (continue), le courant électrique continu circulant entre elles fait chauffer le revêtement par chauffage par résistance.

On voit que la barrette de collecte de courant 4 est située le long de l'arête supérieure représentée ici sur le revêtement 2, qui peut déjà être déposé avant l'impression de la barrette de collecte de courant. Il est naturellement possible également d'imprimer d'abord la barrette de collecte et de déposer ensuite le revêtement.

Le revêtement 2 lui-même n'est pas prolongé jusqu'au bord extérieur de la vitre 1.2, pour éviter autant que possible des attaques de corrosion venant de l'extérieur. Si la vitre 1.2 est découpée dans une ébauche déjà revêtue, le revêtement est enlevé par abrasion en périphérie sur une bande étroite le long du bord de la découpe. On voit dans la Fig. 2, du côté droit, que le film adhésif 3 colmate le revêtement 2 vers l'extérieur.

En dessous de la barrette de collecte de courant 4, une zone superficielle de la surface de la vitre est libre de revêtement, afin d'obtenir une fenêtre de communication 5 du type discuté en détail dans l'introduction. La zone superficielle libre de revêtement, entourée par une arête 2K (indiquée par une ligne blanche interrompue) du revêtement 2, peut être formée par exemple par masquage pendant l'opération de revêtement, ou après le revêtement par l'enlèvement superficiel local du revêtement 2 avec des moyens appropriés, par exemple par abrasion ou par un traitement au laser. Le rapport hauteur-largeur de la fenêtre de communication ne sert que pour la représentation du présent exemple de réalisation. Il peut en réalité varier plus ou moins largement selon le type de vitre, la situation de montage et les prescriptions du client.

Conformément à l'invention, la fenêtre de communication 5 est pourvue d'un recouvrement 6, qui est réalisé ici avec une encre opaque (noire). Ce recouvrement 6 est lui-même électriquement conducteur. Il peut se composer de la même matière que la barrette de collecte de courant 4, ou aussi d'une autre matière appropriée. Dans le premier cas, il serait possible d'imprimer les barrettes de collecte de courant et le recouvrement en une seule opération, avantageuse au point de vue de la technique de production, sur la vitre 1.2 respectivement sur le revêtement 2. Dans chaque cas, la résistance ohmique de surface du recouvrement 6 est nettement inférieure à celle du revêtement 2.

Un tel recouvrement absorbe en général les rayonnements infrarouges à travers la fenêtre de communication 5.

Un motif composé d'ouvertures 7 est dès lors ménagé dans le recouvrement 6. Celles-ci pourraient en principe être réalisées a posteriori, après le dépôt d'un recouvrement initialement continu sur la surface. Si le recouvrement est cependant réalisé par sérigraphie, on exécutera alors le gabarit de sérigraphie de telle façon que les ouvertures 7 soient produites dans le recouvrement 6 en même temps que l'opération d'impression.

Dans le présent exemple, les ouvertures 7 sont réalisées de la façon décrite dans l'introduction, sous la forme d'un motif régulier composé de fentes de même longueur et de même largeur orientées alternativement en direction horizontale et en direction verticale (perpendiculaires l'une à l'autre). Cette disposition se prête bien au passage d'ondes à polarisation circulaire dans la zone de la fenêtre de communication.

Bien entendu, d'autres dispositions de fentes peuvent être plus avantageuses pour d'autres types d'ondes ou de rayonnements.

Dans le présent exemple de réalisation, les fentes pourraient, avec le même effet, être obliques au lieu d'être verticales et horizontales, pour autant qu'elles alternent perpendiculairement l'une à l'autre. Les largeurs et les longueurs des fentes ne sont pas à l'échelle, en particulier des antennes à fente réelles sont nettement plus étroites par rapport à la surface totale de la fenêtre de communication 5.

Dans tous les cas, les ouvertures 7 sont disposées de telle façon qu'il subsiste toujours, entre la barrette de collecte de courant 4 et le revêtement 2/l'arête 2K, des chemins de courant directs à travers le recouvrement 6 à faible résistance ohmique par comparaison avec le revêtement 2. Dans la région de la ligne de coupe II-II, on a indiqué symboliquement avec des flèches des chemins de courant sinueux C louvoyant autour des fentes 7, qui ne peuvent naturellement pas reproduire les flux de courant réels.

Par ailleurs, dans de nombreux pare-brises de véhicules, il est prévu, dans la région située entre les pare-soleil rabattables, un "troisième pare-soleil" sous la forme d'un recouvrement opaque à trame ponctuelle (voir document DE 40 33 188 A1). Celui-ci est en général situé sur la surface de ces vitres tournée vers l'espace intérieur du véhicule, et il n'a absolument aucun rôle électrique.

La fenêtre de communication 5 peut être disposée dans un pare-brise de véhicule environ au milieu de l'arête supérieure (comme cela est largement répandu dans les véhicules actuels), le recouvrement 6 peut alors assurer la fonction supplémentaire de "troisième pare-soleil" auquel cas il présente alors, contrairement à la solution précitée, une structure continue qui permet la circulation du courant et il est en outre disposé dans un autre plan de la vitre feuilletée.

Dans la Fig. 2, les épaisseurs du revêtement 2 (en réalité quelques nanomètres), du film adhésif 3 (par exemple 0,38 mm) et du recouvrement 6 (quelques µm) sont fortement exagérées, sans échelle, pour des raisons de clarté, par rapport aux épaisseurs des vitres rigides 1.1 et 1.2.

On voit que la barrette de collecte de courant 4 est déposée sur le revêtement 2, et que le recouvrement 6 couvre pour sa part les bords de l'évidement du revêtement formant la fenêtre de communication. Le recouvrement 6 enjambe électriquement l'évidement dans le revêtement 2. Il ne se produit dès lors plus de points chauds.

Le film adhésif 3 qui fond pendant le processus d'assemblage des deux vitres rigides va, à la différence de la représentation, remplir plus ou moins les fentes 7. Il va de soi que la matière utilisée pour le recouvrement tout comme la matière du revêtement et de la barrette de collecte de courant est de préférence compatible avec la matière de la couche adhésive et qu'une bonne adhérence du film adhésif sur toutes les surfaces de ces couches est de préférence garantie.

Sur la surface extérieure supérieure de la vitre rigide 1.1, on a encore disposé du côté du bord une bande d'encre opaque 8, qui se transforme en une trame ponctuelle de la manière habituelle en direction du milieu de la vitre. Elle peut être disposée de façon connue en soi à cet endroit et/ou sur une ou plusieurs des autres surfaces des vitres rigides situées à l'intérieur ou à l'extérieur du composite, afin de masquer à la vue la barrette de collecte de courant 4.

## Revendications

1. Vitre de fenêtre (1), avec un revêtement (2) électriquement conducteur et chauffable par un flux de courant électrique appliqué au moyen d'au moins deux électrodes (4), et au moins une fenêtre de communication (5) ménagée dans ce dernier sous la forme d'une interruption dudit revêtement, la fenêtre étant apte à laisser passer un rayonnement dit de communication utilisé comme signal porteur d'informations à transmettre et dont la longueur d'onde est comprise dans une plage de longueurs d'onde pouvant être réfléchies ou absorbées par le revêtement (2), **caractérisé en ce que** la fenêtre de communication (5) est pourvue d'un recouvrement (6) électriquement conducteur déposé sur le revêtement (2) de telle façon qu'il recouvre de tous les côtés les bords de la fenêtre de communication (5) sans revêtement (2),
le recouvrement (6) est relié électriquement audit revêtement (2) directement ou par l'intermédiaire d'un autre élément électriquement conducteur en contact avec au moins une partie de bords de la fenêtre (5) et en contact avec le revêtement (2),
le recouvrement (6) est situé dans le flux de courant entre les électrodes (4) et peut également être chauffé sous forme de chauffage par résistance, et
des interruptions (7) sont ménagées dans le recouvrement (6), qui augmentent sa perméabilité audit rayonnement de communication à travers la fenêtre de communication et laisse ainsi passer le rayonnement de communication à transmettre à travers la fenêtre de communication, mais qui n'empêchent cependant pas un flux de courant à travers le recouvrement (6).

2. Vitre de fenêtre selon la revendication 1 **caractérisé en ce que** le recouvrement (6) présente une résistance ohmique par unité de surface inférieure à la résistance ohmique par unité de surface dudit revêtement (2).

3. Vitre de fenêtre selon l'une des revendications 1 ou 2, **caractérisé en ce que** les interruptions (7) dans le recouvrement (6) sont constituées par des antennes à fente accordées sur ledit rayonnement de communication à travers la fenêtre de communication (5).

4. Vitre de fenêtre selon l'une des revendications 1 à 3, **caractérisé en ce que**, les interruptions (7) sont formées dans différentes directions, en particulier perpendiculairement l'une à l'autre.

5. Vitre de fenêtre selon la revendication 4, **caractérisé en ce que** les interruptions (7) se présentent sous la forme de fentes croisées et/ou de fentes droites orientées en alternance perpendiculairement l'une à l'autre.

6. Vitre de fenêtre selon l'une quelconque des revendications précédentes, **caractérisé en ce que** le recouvrement (6) est fabriqué par impression, en particulier par sérigraphie d'une encre électriquement conductrice.

7. Vitre de fenêtre selon l'une quelconque des revendications précédentes, **caractérisé en ce qu'**il est prévu au moins deux électrodes (4) en forme de bandes, appliquées par impression, en particulier par sérigraphie, pour introduire une tension de chauffage dans le revêtement (2).

8. Vitre de fenêtre selon la revendication 7, **caractérisé en ce que** le recouvrement (6) et les électrodes (4) sont composés de la même matière et sont de préférence imprimés en une seule opération.

9. Vitre de fenêtre selon l'une quelconque des revendications 1 à 8, **caractérisé en ce que** ledit recouvrement forme au moins en partie un pare-soleil, de préférence situé entre deux pare-soleils rabattables.

10. Vitre de fenêtre selon l'une quelconque des revendications précédentes, constitué par une vitre feuilletée (1) composée d'une première vitre rigide (1.2) pourvue du revêtement (2) et du recouvrement (6), dudit autre élément électriquement conducteur, d'une couche adhésive (3) et d'une seconde vitre rigide (1.1).

## Patentansprüche

1. - Fensterscheibe (1) mit elektrisch leitendem Überzug (2), beheizbar durch einen elektrischen Stromfluss, der mittels mindestens zweier Elektroden (4) angelegt wird, und mindestens einem Kommunikationsfenster (5), das in letzterem in Form einer Unterbrechung des genannten Überzugs aufgebracht ist, wobei das Fenster eine sogenannte Kommunikationsstrahlung durchgehen lassen kann, der als Signal benutzt wird, das zu übertragende Informationen trägt, und dessen Wellenlänge in einem Bereich von Wellenlängen liegt, die von dem Überzug (2) reflektiert oder absorbiert werden können, **dadurch gekennzeichnet, dass** das Kommunikationsfenster (5) mit einer elektrisch leitenden Abdeckung (6) auf dem Überzug (2) versehen ist, die an allen Seiten die Ränder des Kommunikationsfensters (5) ohne Überzug (2) bedeckt, wobei die Abdeckung (6) elektrisch mit dem genannten Überzug (2) verbunden ist, direkt oder mittels eines anderen elektrisch leitenden Elements, das in Kontakt mit mindestens einem Teil der Ränder des Fensters (5) und in Kontakt mit dem Überzug (2) steht, wobei die Abdeckung (6) in dem Stromfluss zwischen den Elektroden (4) liegt und auch in Form einer Widerstandsheizung erwärmt werden kann, und Unterbrechungen (7) in die Abdeckung (6) eingebracht sind, die ihre Durchlässigkeit für die genannte Kommunikationsstrahlung durch das Kommunikationsfenster erhöhen und so die zu übertragende Kommunikationsstrahlung durch das Kommunikationsfenster durchgehen lassen, jedoch nicht einen Stromfluss durch die Abdeckung (6) verhindern.

2. - Fensterscheibe nach Anspruch 1, **dadurch gekennzeichnet, dass** die Abdeckung (6) einen ohmschem Wilderstand pro Oberflächeneinheit aufweist, der niedriger als der ohmsche Wilderstand pro Oberflächeneinheit des genannten Überzugs (2) ist.

3. - Fensterscheibe nach einem der Ansprüche 1 oder 2, **dadurch gekennzeichnet, dass** die Unterbrechungen (7) in der Abdeckung (6) aus Schlitzantennen bestehen, die auf die besagte Kommunikationsstrahlung durch das Kommunikationsfenster (5) abgestimmt sind.

4. - Fensterscheibe nach einem der Ansprüche 1 bis 3, **dadurch gekennzeichnet, dass** die Unterbrechungen (7) in verschiedenen Richtungen gebildet sind, insbesondere senkrecht zueinander.

5. - Fensterscheibe nach Anspruch 4, **dadurch gekennzeichnet, dass** die Unterbrechungen (7) die Form von überkreuzten Schlitzen haben und/oder von abwechselnd senkrecht zueinander ausgerichteten geraden Schlitzen.

6. - Fensterscheibe nach einem beliebigen der vorherigen Ansprüche, **dadurch gekennzeichnet, dass** die Abdeckung (6) durch Aufdrucken gefertigt wird, insbesondere durch Siebdruck mit einer elektrisch leitenden Tinte.

7. - Fensterscheibe nach einem beliebigen der vorherigen Ansprüche, **dadurch gekennzeichnet, dass** mindestens zwei Elektroden (4) in Form von Bändern vorgesehen ist, die durch Aufdrucken aufgebracht werden, insbesondere durch Siebdruck, um eine Heizspannung in dem Überzug (2) herbeizuführen.

8. - Fensterscheibe nach Anspruch 7, **dadurch gekennzeichnet, dass** die Abdeckung (6) und die Elektroden (4) aus demselben Material bestehen und vorzugsweise in einem einzigen Schritt gedruckt werden.

9. - Fensterscheibe nach einem beliebigen der Ansprüche 1 bis 8, **dadurch gekennzeichnet, dass** besagte Abdeckung mindestens zum Teil eine Sonnenblende bildet, die vorzugsweise zwischen zwei herunterklappbaren Sonnenblenden gelegen ist.

10. - Fensterscheibe nach einem beliebigen der vorherigen Ansprüche, bestehend aus einer Verbundscheibe (1), bestehend aus einer erster starren Scheibe (1.2) mit dem Überzug (2) und der Abdeckung (6), aus dem genannten anderen elektrisch leitenden Element, einer Klebschicht (3) und einer zweiten starren Scheibe (1.1).

## Claims

1. Window pane (1), with an electrically conductive coating (2) heatable by an electrical current flow applied by means of at least two electrodes (4), and at least one communication window (5) made in the form of an interruption of said coating, with the window capable of allowing passage of communication radiation used as a carrier signal for data to be transmitted and whose wavelength is within a range of wavelengths that can be reflected or absorbed by the coating (2) **characterized in that** the communication window (5) is provided with an electrically conductive covering (6) deposited on the coating (2) such that it covers, on all sides, the edges of the communication window (5) without coating (2), the covering (6) is electrically connected to said coating (2) directly or through the intermediary of another electrically conductive element in contact with at least one part of the edges of the window (5) and in contact with the coating (2), the covering (6) is situated within the current flow between the electrodes (4) and can also be heated in the form of resistance heating, and interruptions (7) are made in the covering (6), which increase its permeability to said communication radiation through the communication window and thus allows passage of the communication radiation to be transmitted through the communication window, but, nevertheless, do not prevent current flow through the covering (6).

2. Window pane according to claim 1 **characterized in that** the covering (6) has ohmic resistance per unit surface area lower than the ohmic resistance per unit surface area of said (2).

3. Window pane according to one of claims 1 or 2, **characterized in that** the interruptions (7) in the covering (6) comprise slot antennas attuned to said communication radiation through the communication window (5).

4. Window pane according to one of claims 1 through 3, **characterized in that** the interruptions (7) are formed in different directions, in particular perpendicular to one another.

5. Window pane according to claim 4, **characterized in that** the interruptions (7) have the form of crossed slots and/or straight slots alternatingly oriented perpendicular to one another.

6. Window pane according to any one of the preceding claims **characterized in that** the covering (6) is fabricated by printing, in particular by screen printing of an electrically conductive ink.

7. Window pane according to any one of the preceding claims, **characterized in that** at least two electrodes (4) are provided in the form of bands, applied by printing, in particular by screen printing, for introducing a heating voltage into the coating (2).

8. Window pane according to claim 7, **characterized in that** the covering (6) and the electrodes (4) are composed of the same material and are preferably printed in a single operation.

9. Window pane according to any one of claims 1 through 8, **characterized in that** said covering forms at least in part a sun visor, preferably situated between two hinged sun visors.

10. Window pane according to any one of the preceding claims, comprising a laminated pane (1) composed of a first rigid pane (1.2) provided with the coating (2) and with the covering (6), said other electrically conductive element, an adhesive layer (3), and a second rigid pane (1.1).
